# EUROPEAN PATENT APPLICATION

(11) **EP 3 444 529 A1**
(43) Date of publication of application: **20.02.2019**
(21) Application number: 17186877.1
(22) Date of filing: 18.08.2017
(51) Int. Cl.: F22B 37/10, F01K 23/10, F22B 1/18, F01K 15/02, F01K 25/08

(54) **HEAT RECOVERY METHOD AND SYSTEM**

(71) Applicant: Nederlandse Organisatie voor toegepast- natuurwetenschappelijk onderzoek TNO, 2595 DA 's-Gravenhage (NL)
(72) Inventor: ROPS, Cornelius Maria, 2595 DA 's-Gravenhage (NL)
(74) Representative: V.O.

(57) **Abstract**

A method for recovering heat from a flue gas from an engine and a heat recovery system are described. The method involves contacting coolant in a vaporization chamber with a plurality of flow-modifying structures. The structures are arranged in series in the direction of the flow of coolant liquid and are each configured for modifying the flow of the coolant liquid and the vapour in said vaporization chamber.

## Description

The invention relates to heat recovery. In particular, the invention relates to heat recovery from flue gas by heat exchange against a cooling liquid that is vaporized.

The recovery of low grade heat is currently an important objective for the improvement of the energy efficiency of various processes and devices including vehicles. A proposed solution is an Organic Rankine Cycle (ORC). A simple Rankine Cycle system typically comprises an evaporator, an expansion device (such as a turbine or other expander), a condenser and a working fluid pump. In an ORC system, an organic fluid is used with a boiling point occurring at a lower temperature than that of water. In the expansion device, the energy is recovered as work, which can be used to perform mechanical work and/or to generate electricity.

It is desired to increase the amount of energy recovered from the hot fluid stream.

An object of the present invention is to provide a heat recovery method and system that address the above-mentioned desires at least in part.

It has surprisingly been found that this objective can be met at least in part by using a heat exchanger having on the coolant side channels and structures that break up the flow of the vaporizing coolant in the channels.

Accordingly, the invention relates in an embodiment to a method for recovering heat from a flue gas from an engine, the method comprising:
- supplying a first fluid, preferably flue gas from the engine, to a first chamber of a heat exchanger, and supplying coolant liquid to a vaporization chamber of said heat exchanger, wherein said coolant liquid vaporizes in the vaporization chamber to give vapour; using the vapour to drive an expansion device, thereby recovering said heat as mechanical work or electrical energy, preferably using a generator; condensing the vapour in a condenser downstream of said expansion device to give condensate, pressurizing the condensate in a pump to give pressurized condensate, and supplying the pressurized condensate to the vaporization chamber as said coolant; wherein in said vaporization chamber said coolant liquid flows in contact with a heat exchanging wall in heat exchanging contact with flue gas in said flue gas chamber thereby causing vaporization of said coolant liquid; wherein said vaporization chamber comprises a plurality of flow-modifying structures that are arranged in series in the direction of the flow of coolant liquid and that are each configured for modifying the flow of the coolant liquid and the vapour in said vaporization chamber, and wherein each of said flow-modifying structures comprises: 1) a first part wherein a channel for coolant is divided in two channels for coolant, and 2) a second part, arranged downstream of the first part, wherein at least two channels for coolant are combined into a single channel for coolant.

The invention also provides for a heat recovery system comprising such flow-modifying structures.

The present invention is based on the judicious insight that the energy recovery can be improved if the pressure of the fluid at the coolant side of the heat exchanger is lower, as then the boiling temperature of the coolant decreases and more heat can be withdrawn from the hot fluid. The pressure of the fluid at the coolant side can in particular be decreased if at the same time explosive bubble growth of the vaporizing coolant, that can more easily occur at lower pressures, is avoided by providing structures in the channels for coolant of the heat exchanger, e.g. corrugations of the channel walls, wherein said structures break up the flow of the coolant.

For example the heat exchanger can be provided on the coolant side with channels as described in US 2011/0000624, such as with a field of pillars as described therein.

For heat recovery, it is desirable that the temperature of the flue gas is higher than the boiling temperature. Accordingly a lower boiling temperature of the coolant allows for better heat recovery and/or heat recovery from lower grade waste heat stream (having a lower temperature), and/or a smaller heat exchange area. The invention provides for this while at the same time avoiding explosive bubble growth.

Currently low pressures in the vaporization chamber are generally not used, i.e. the vaporization chamber is generally kept at high pressure in existing systems so as to reduce the risk of explosive bubble growth. With the flow-modifying structures of the vaporization chamber of the present invention, the risk of explosive bubble growth is reduced and lower pressures can be used. Alternatively and/or additionally, the heat exchange area can be reduced.

As used herein, annular flow refers to flow of a two-phase fluid (vapor and liquid) in a channel with liquid flowing over the walls of the channel and vapor flowing in the centre of the channel.

In a first aspect, the present invention pertains to a method of recovering heat. In particular, (waste) heat is recovered from a first fluid stream, such as from flue gas or exhaust gas, for instance from an engine. The method is based generally on a Rankine cycle. Accordingly, the method comprises heat exchanging the first stream with cooling liquid in a heat exchanger such that the cooling liquid vaporizes in a vaporization chamber, using the vapor to drive a device, condensing the vapor, pressuring the condensate, and recycling the condensate to the vaporization chamber. The device is typically an expansion device that performs mechanical work. In this way the heat of the first stream is recovered as mechanical work or electrical energy. In the present invention, the vaporization chamber is provided with flow modifying structures that generally break up the flow of the coolant, in particular of liquid slugs in the coolant. This helps to reduce the risk of explosive bubble growth of the vaporizing coolant.

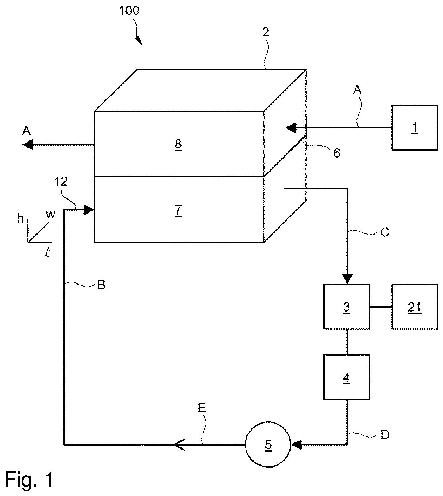

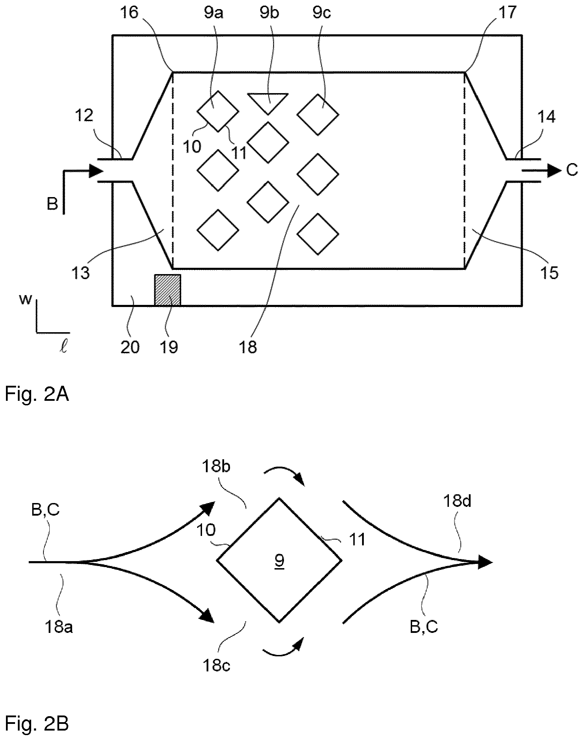

In connection with **Figure 1****,** **2A and 2B** (each showing an illustrative embodiment not limiting the invention), the method comprises supplying a first fluid stream (A) (gas and/or liquid) from a source (1) to a first chamber (8) of a heat exchanger (2). The fluid stream (A) is preferably flue gas from an engine (1) supplied to a flue gas chamber (8). The fluid from the heat source (1) can also be a liquid e.g. in case of a solar plant. The first fluid stream can for instance also be an intermediate heat transfer fluid, e.g. a liquid. The method further comprises supplying coolant liquid (B) to a vaporization chamber (7) of said heat exchanger (2). The coolant liquid (B) vaporizes in the vaporization chamber (7) to give vapour (C). A stream comprising vapour and optionally coolant liquid B leaves the vaporization chamber (7).

The coolant comprises for instance an organic substance. The coolant typically has a lower boiling point than water (at the same pressure). The invention implements for instance an Organic Rankine Cycle._Generally, a lower boiling point increases the efficiency of the heat exchanger. Some examples of suitable coolants include alcohols such as methanol, ethanol and propanol, hydrocarbons such as isobutene, pentene and propane; and hydrofluorocarbons such as R143a (1,1,1,2-tetrafluoroethane). The coolant is for instance a (organic) refrigerant compound. Further suitable coolants include water, ammonia and acetone can also be used.

In the vaporization chamber (7) the coolant liquid (B) flows in contact with a heat exchanging wall (6), typically parallel to said wall, in heat exchanging contact with the first fluid stream (flue gas) (A) in said chamber (8). This causes vaporization of at least part of said coolant liquid (B). It is desired that a large amount of coolant vaporizes, with small heat exchange area of said wall (6). A small heat exchange area is desirable in case limited space is available (e.g. in vehicles) and/or to reduce construction costs. It is also desirable to reduce the pressure drop in the first gas stream (A) (so-called back pressure). Apart from choosing liquids with an intrinsic lower boiling temperature, the boiling temperature can be lowered by reducing the operating pressure. Reduction of pressure drop over the evaporator allows a lower operating pressure.

The first stream is cooled in the first chamber (8) and has desirable a low temperature at the outlet of said first chamber and the temperature decrease of the first stream is desirably large.

The method further comprises using the vapour (C) to drive a device (3). Preferably, the device is an expansion device (3). The expansion device is for instance a turbine or other type of expanded, such as a volumetric expander. An example is a screw expander. In this way, the thermal energy of the first fluid stream (e.g. flue gas) is recovered and/or converted into mechanical energy or electrical energy. The vapor for instance turns a rotor in the expander to produce shaft power. The expansion device 3 is for instance mechanically coupled (e.g. through the shaft) to a generator (e.g. alternator), or to the engine 1.

The method further comprises condensing the vapour (C) in a condenser (4) arranged downstream the device (3) to give condensate liquid (D), and pressurizing the condensate (D) in a pump (5) to give pressurized condensate (E). The pressurized condensate (E) is supplied to the vaporization chamber (8) as said coolant liquid (B). Hence, the coolant is contained in a closed loop.

The system can optionally comprise additional units such as a super-heater for providing superheated steam.

In the present invention, independent of the type of first fluid stream, the vaporization chamber vaporization chamber (7) comprises a plurality of flow-modifying structures (9). The method comprises a step of contacting the coolant with these structures, in particular because the fluid flows around these structures through the vaporization chamber. These structures are arranged in series in the direction of the flow of coolant (coolant liquid (B) and vapor (C)). They are arranged for contact with the coolant. The structures 9 are each configured for modifying the flow of the coolant liquid (B) and the vapour (C) in said vaporization chamber (7). The structures are provided in the part of the vaporization chamber where the coolant in in heat exchanging contact with the first fluid stream and where the coolant vaporizes. The structures (9) are positioned such that vaporizing coolant contacts multiple of said structures in series. The vaporizing coolant in particular impinges on the structures (9) which are generally protrusions of the wall (6). The structures (9) are spaced apart in the vaporization chamber and the spaces between them define channels (18) for the coolant. The structures are arranged such that coolant flowing in such a channel (18) impinges on a structure (9) and is divided in at least two streams in channels that are separated from each other by a separation, preferably by said structure (9). In addition, the structures (9) are also arranged such that channels (18) are also merged.

More in particular, each of the flow-modifying structures (9a, 9b, 9c) comprises a first part and a second part, preferably a upstream end part and a downstream end part (with respect to the flow of coolant around the structure). By the first part (10) a channel (18a) for coolant is divided into two channels (18b, 18c) for coolant. Preferably the at least two channels (18b, 18c) are separated from each other by at least a part of said flow-modifying structure. The two channels run for example at an angle in the range of 5° - 85° to the length of the reactor. The second part (11) is arranged downstream of the first part (10) with respect to the flow of coolant. The first part preferably comprises a sharp edge protruding in the upstream direction to break up coolant. By the second part at least two channels for coolant are combined into a single channel for coolant.

The channels (18) and structures (9) provide for increased heat exchange area. Because the channels are typically small, the surface tension forces are important relative to inertia. This enhances flow distribution and promotes annular flow. Vapour bubbles and liquid slugs break up on the first part of the structures, promoting an overall bubbly flow pattern and/or annular flow. A flow of the annular flow type reduces large scale oscillations of the flow.

Generally, the flow-modifying structures (9) are protrusions of said wall (6) into said vaporization chamber (7). For instance the wall (6) can be a plate with corrugations at least at the vaporization chamber side of the plate. The plate is typically a metal plate. The structures (9) are for instance integrally formed and unitary with the wall (6).

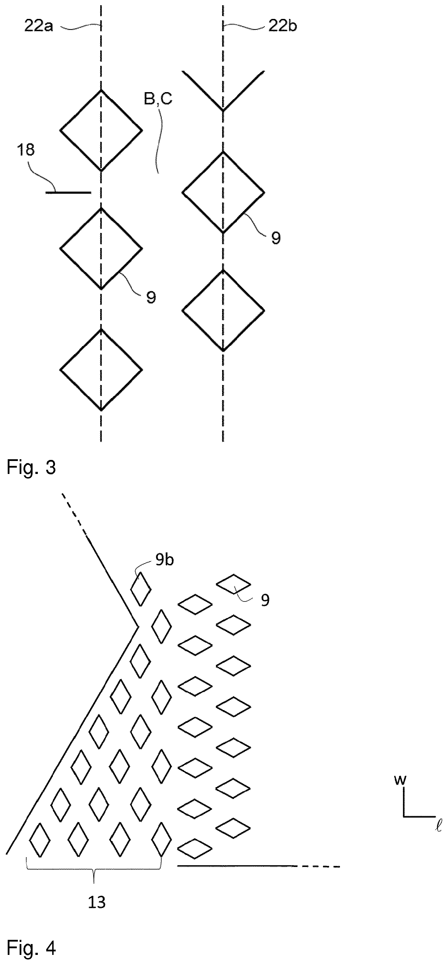

Preferably the heat exchanger (2) comprises a casing. Preferably the heat exchanger is a plate type heat exchanger. The heat exchanger comprises an inlet (12) for pressurized coolant liquid and typically an inlet plenum (13) between said inlet (12) and a first end (16) of said vaporization chamber (7). The inlet plenum is for instance an inlet manifold. Within this inlet manifold (13) the flow modifying structures (9b) can be arranged in such a way to promote optimal flow distribution in width direction (w), see fig 4.

In case of a stacked plate heat exchanger with multiple vaporization chambers (7) and first chambers (8) stacked on each other, the inlet (12) is connected with a plurality of vaporization chambers through said inlet plenum or manifold 13. The heat exchanger (2) furthermore comprises an outlet (14) for vapour (C) at an opposite second end (17) of said vaporization chamber (7). Said first and second end are opposite each other at least along the flow of the coolant. The first end (16) and second end (17) define a length (l) of said vaporization chamber between them. At the outlet (14), the coolant stream may also contain liquid coolant.

The heat exchanger for instance further comprises outlet plenum (15) between said second end (17) and said outlet (14). In case of a stacked heat exchanger, multiple second ends can be connected to an outlet through said outlet plenum. The outlet plenum may further comprise a gas/liquid separation and a separate outlet for coolant liquid.

Preferably the first end (16) is positioned at the place of initial heat exchanging contact between the flue gas (A) and the coolant liquid (B) through wall (6). Preferably the second end (17) is positioned at the place of terminal heat exchanging contact between the flue gas (A) and the vapour (C) in the vaporization chamber (7) through the wall (6), for one passage of coolant through the vaporization chamber.

The method comprises flowing coolant liquid (B) from said first end (16) to said second end (17). During this flow, at least part of the flowing coolant (B, C) is subjected to multiple flow modifications (in series) while flowing in said vaporization chamber (7) from first end (16) and to the second end (17). Each flow modification comprises a step of dividing the flow of coolant into two streams, and a step of combining at least two streams of coolant into a single stream. Preferably, the steps of dividing and combining are alternating.

**Figure 3** shows a preferred embodiment of the structures in top view. The vaporization chamber (7) comprises staggered rows (22a, 22b) of pillars (9). The pillars protrude from the wall (6). The rows are distributed over said length (1) of the vaporization chamber (7), i.e. are placed at various positions over the flow path. Typically the centres of the pillars of each row are spaced apart in the length direction between the rows. Each row typically extends in the width direction, and in each row (22) the pillars (9) are distributed and spaced apart in the width direction (w) transversal to said length (1). In each row, the centres of the pillars can have the same or different positions in the length direction. For a pair of neighbouring rows (22a, 22b), the pillars (9) have a different position in said width direction (w). This provides for an arrangement wherein the rows of pillars are staggered. The arrangement in rows is preferably and not necessary. For instance an irregular arrangement of pillars can also be used. The arrangement of pillars is typically staggered and such that from first and to second end, there are at least 1, at least 2, at least 3, or even at least 10 pillars provided at each position in width direction. This avoids that a part of the coolant can flow from first end to second end at one without encountering a pillar.

Preferably, the vaporization chamber (7) is provided with an internal structure. Preferably, the cross section of the evaporation volume is substantially constant along the main flow path for coolant in the vaporization chamber (7) from inlet to outlet of said chamber. This refers in particular to the cross section perpendicular to the flow direction e.g. the length direction. Preferably, the surface area of the flow path for coolant is said cross-section is substantially constant (such as less than 10% difference between minimum and maximum, based on the maximum) in said flow direction. Preferably, the internal structure comprises a regular pattern. For instance, the internal structure is a field (array) of pillars. The pillars for example protrude from the heat exchanging wall (6). Preferably the pillars are arranged in a staggered way.

Preferably, the pillars have in cross section in the plane parallel to said wall (6) a shape that is e.g. diamond shape, rectangular shape, hexagonal, triangular, circle, or elliptical Preferably, the interior of the shape is a convex set, i.e. every point of a line segment that joins a pair of points on said cross-section is inside the pillar. This avoids pillars that are hollow or have indents.

Preferably, the heat exchanger comprises an inlet plenum positioned between the inlet of the heat exchanger for cooling liquid and the vaporization chamber and preferably also a pressure drop inducer preferably between the inlet plenum and the vaporization chamber. Preferably the coolant is not in heat exchanging contact with the first stream in said inlet plenum and in said pressure drop inducer. Preferably, said wall (6) is arranged downstream of said inlet plenum and preferably also downstream of said pressure drop inducer. The pressure drop inducer is e.g. a plurality of flow restriction orifices. The inlet plenum is for example a manifold and is for example provided with fins or other structures to distribute the coolant especially over the width of the vaporization chamber (7).

Preferably the heat exchanger (2) comprises heat flow restriction (19) (e.g. a thermal insulating part 19) in the casing (20) between the inlet 12 and the first end 16, more preferably between the inlet plenum 12 and the first end, even more preferably between the pressure drop inducer and the first end (16). The heat flow restriction is for instance a section of the casing of the vaporization chamber provided with thermal insulation material and/or with air gaps such as slots cut away in the casing (20). This prevents premature vaporization of the coolant liquid B upstream of the first end (16). The heat flow restriction is a part of the casing that has lower heat conductivity (in the direction parallel to the coolant flow) such as by having a reduced conduction area and/or material with lower thermal conductivity than the material of the wall (6).

Preferably, the channels between two flow-modifying structures have a diameter of less than 10 mm, more preferably less than 5 mm, or less than 2.0 mm, or less than 1.0 mm. A typical lower limit for the coolant channels is 10 µm.

In a preferred embodiment, the coolant is ethanol. In a preferred embodiment, the method comprises evaporating at least 10 g coolant (e.g. ethanol) per second, or at least 20 g/s or at least 40 g/s in the heat exchanger (which can have a plurality of heat exchanging walls 6 and stacked chambers 7, 8), e.g. if the coolant is ethanol. In a preferred embodiment, the distance between the first and second end is 5 to 100 cm, more preferably 10 - 50 cm. These amounts of evaporated coolant, in particular ethanol, with such dimensions of the channel and the length are for instance suitably used in a vehicle such as a car. The pressure in vaporization chamber is e.g. 1 to 20 bar. The pressure in the vaporization chamber is preferably less than 10 bar, more preferably less than 5 bar. Accordingly, the pressure of the pressurized coolant at the inlet 12 is for instance in the range of 1 to 20 bar, preferably 1 - 10 bar or 1-5 bar.

The invention also pertains to a heat recovery system (100). The heat recovery system preferably has the features as described above in connection with the method. However, the invention also pertains to the heat recovery apparatus. The apparatus is preferably used for the methods as described. The apparatus can be operated with any suitable fluids as coolant and as first stream from a heat source. In the following, the heat recovery apparatus will be further described. The reference numerals to the drawings are for convenience and are not to be construed as limiting. The heat recovery system or apparatus (100) comprises a heat exchanger (2) with a first chamber (8) and a vaporization chamber (7). The chambers are separated by a wall (6) between said chambers. The wall (6) allows for indirect heat exchange and is impermeable to fluids, the wall (6) is typically a metallic part. The heat exchanger further comprises an inlet 12 for pressurized coolant liquid and an outlet (14) for coolant vapor. The inlet 12 and outlet 14 are connected to the vaporization chamber (7). The first chamber has an inlet and an outlet for a first fluid stream. The system further comprises an expansion device (3) connected to said outlet (14). The expansion device (3) is preferably coupled to a generator (20). The expansion device is for instance a turbine or other type of expander such as volumetric expanders, sliding vane expansion machines, screw expanders, scroll expanders.

The system further comprises a condenser (4) for condensing the vapour. The condenser (4) is arranged downstream of said expansion device 3. The condenser (4) has an inlet for vapor connected to an outlet of the expansion device. The condenser is for example a heat exchanger, for instance for heat exchange against ambient air. The condenser (4) has an outlet for condensate.

The system furthermore comprises a pump (5) for pressurizing the condensate, and a connection for flow of the condensate from said pump to the inlet for the inlet (12) for pressurized coolant liquid.

The system accordingly comprises a closed loop for flow of said coolant. Hence, the coolant fluid is (e.g. for at least 90 wt.%) transported from the outlet (14) back to the inlet (12) through the loop.

The vaporization chamber (7) comprises a plurality of flow-modifying structures (9) that are arranged in series in the direction of the flow of coolant liquid (B). The flow-modifying structures are each configured for modifying the flow of the coolant liquid (B) and the coolant vapour (C) in said vaporization chamber (7). Each of said flow-modifying structures (9a, 9b, 9c) comprises a first part (10) that divides a channel (18a) for coolant in two channels (18b, 18c) for coolant, and a second part (11), arranged downstream of the first part (10), that combines at least two channels (18b, 18c) for coolant are combined into a single channel (18d) for coolant. In other words the first and second part are adapted for guiding the flow of coolant such that a stream is divided into two streams, and such that two coolant streams (in adjacent channels (18)) are combined into one stream. More in particular, the first part (10) is preferably a protrusion of the wall 6 that is diverging in the direction of the coolant flow, at the protrusion surface that contacts coolant in use, for the coolant flow the width/length plane (i.e. parallel to wall 6), and the second part 11 is converging.

The invention furthermore pertains to a vehicle (such as a car) comprising a combustion engine and such a heat recovery system. In the vehicle an outlet for exhaust gas of said combustion engine is connected with an inlet of said first chamber.

The system can also be applied e.g. to ships, trains, industrial plants, power plants and waste incinerators, typically having a combustion chamber or combustion engine with an outlet connected to the inlet for flue gas of the system. The system can also be used in connection with other heat sources such as solar plants and nuclear power plants wherein a fluid is heated and is supplied to the first chamber of the heat recovery system.

The invention accordingly further pertains to the use of the plurality of flow-modifying structures (9) for reducing the operating pressure of the system while avoiding explosive bubble growth, i.e. for reducing the minimum operating pressure of the system (or of the method) at which no explosive bubble growth occurs.

Some embodiments of the invention will now be further illustrated in the drawings, which do not limit the invention or the claims.

In the figures, the references are as follows. To the extent that these references are also used in the description or in the claims, this is illustrative and does not limit the invention or the claimed subject-matter.
1. Engine (optional)
2. Heat exchanger
3. Expansion device
4. Condenser
5. Pump
6. Wall
7. Vaporization chamber
8. Flue gas chamber (first chamber)
9. Flow-modifying structures, preferably pillars
10. First part of flow-modifying structure
11. Second part of flow-modifying structure
12. Inlet for pressurized liquid coolant
13. Inlet plenum.
14. Outlet for vapour
15. Outlet plenum
16. First end of heat exchanging zone (upstream end)
17. Second end of heat exchanging zone (downstream end)
18. Channels for coolant
19. Heat flow restriction
20. Casing
21. Generator
22. Row of pillars 9
100. Heat recovery system
A. flue gas (first fluid)
B. coolant liquid
C. coolant vapour
D. coolant condensate
E. pressurized coolant condensate

**Figure 1** shows an overview of an illustrative heat recovery system 100 with the heat exchanger 2, the expansion device 3, condenser 4, and pump 5, and the first fluid stream source 1 e.g. a combustion engine. The optional generator 21 connected to the expansion device 3 is also shown. The heat exchanger 2 comprises the vaporization chamber 7, the first chamber 8, and the heat exchanging wall 6 between them. Also shown are first fluid stream A (e.g. flue gas), coolant liquid B flowing from the pump 5 to the heat exchanger 2, in particular to the inlet 12 of the vaporization chamber 7, and the vapour C flowing from the outlet 14 to the expansion device 3. For the heat exchanger 2, the height h is perpendicular to the wall 6, the length 1 is parallel to the coolant flow in chamber 7, and the width is perpendicular to 1 and parallel to wall 6. The directions h, w and 1 (height, widht, and length) are for heat exchanger 2 only and do not apply to units 3, 4 and 5. The system 100 is for instance included in a vehicle such as a car.
**Figure 2A** shows a schematic top view of the vaporization chamber 7 with structure 9 (a pillar) with first part 10 and second part 11 and channels 18 between the pillars (9a, 9b, 9c). The three pillars 9a, 9b, and 9c are arranged in series along the flow from first end 16 to second end 17. Heat flow restriction 19 is a slot in casing 20. The pillars are shown as diamonds in top view, but many other shapes are also possible, such as ellipses and circles.
**Figure 2B** shows an expanded top view of a pillar 9. At the first part 10 of pillar 9, a channel 18a is dived in two channels 18b and 18c that are separated by the pillar 9. At the second part 11 of pillar 9, the two channels 18b and 18c are combined into a channel 18d. Hence, liquid slugs in channel 18a are converted into an overall bubbly flow pattern or an annular flow in channels 18ba and 18c. The combination of first part 10 second part 11 provides for substantially the same width of the vaporization chamber over its length.
**Figure 3** shows a top view of two staggered rows (22a, 22b) of pillars 9. After passing through the channels 18 between the pillars of the first row 22a, the coolant is broken up on the sharp edges of the pillars of the second row 22b.
**Figure 4** shows a further top view of staggered rows of pillars (9a, 9b), wherein the pillars have different orientation so as to provide in part for an inlet manifold 13. In the inlet manifold 13, the pillars 9b are arranged for distributing the liquid over the width direction.

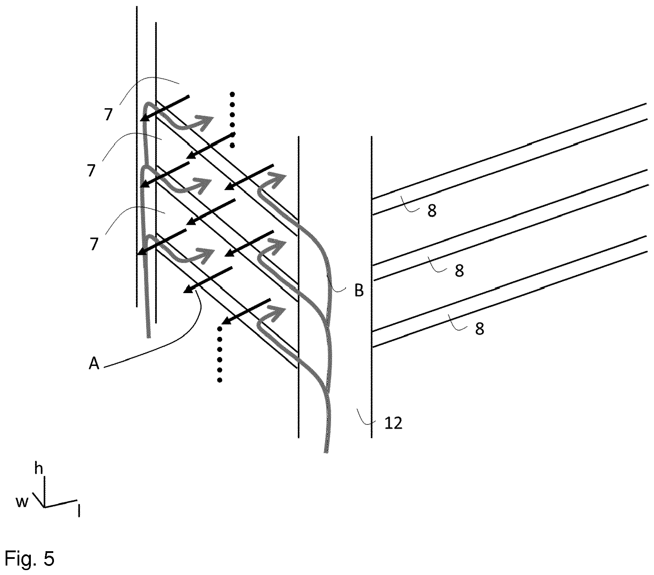

**Figure 5** shows a perspective view of the illustrative heat recovery system 100 with a stack of vaporization chambers 7 and first chamber 8. The coolant flow B is supplied through the inlet 12 to the chamber 7. The fluid stream A, e.g. flue gas, exits the chambers 8 typically at the same side to provide for flow in chambers 8 counter-current with the coolant in chamber 7.

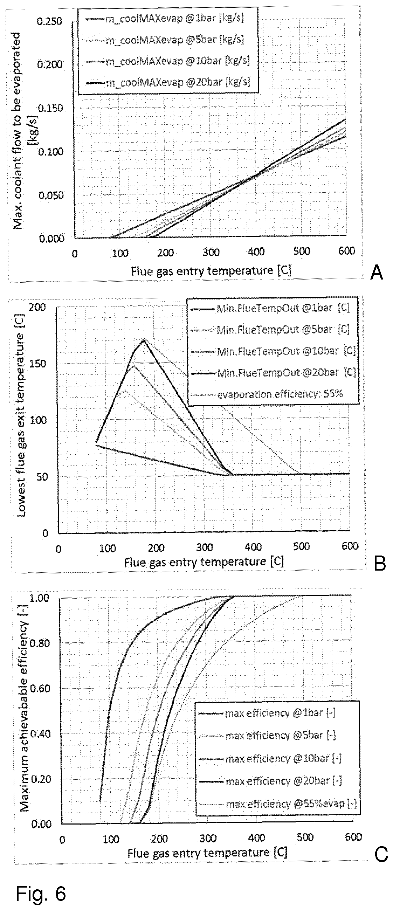

**Figure 6** shows that at lower pressures such as at 1 bar, a higher efficiency is achieved especially at lower flue gas entry temperatures. Panel A shows the maximum coolant flow to be evaporated (kg/s) as function of flue gas entry temperature, with up to about 400 °C the highest amount for 1 bar pressure.

Panel B shows the flue gas exit temperature, with the lowest exit temperature for 1 bar. Panel C shows the efficiency, with highest efficiency for 1 bar. For 1 bar, boiling temperature T is 77°C, for 5 bar 129 °C, for 10 bar 152 °C, and for 20 bar 174 °C.

## Claims

1. A method for recovering heat from a flue gas from an engine, the method comprising:
- supplying flue gas (A) from the engine (1) to a flue gas chamber (8) of a heat exchanger (2), and supplying coolant liquid (B) to a vaporization chamber (7) of said heat exchanger (2), wherein said coolant liquid (B) vaporizes in the vaporization chamber (7) to give vapour (C),
- using the vapour (C) to drive an expansion device (3), thereby recovering said heat as mechanical work or electrical energy, preferably using a generator (21),
- condensing the vapour (C) in a condenser (4) downstream of said expansion device (3) to give condensate (D), pressurizing the condensate (D) in a pump (5) to give pressurized condensate (E), and supplying the pressurized condensate (E) to the vaporization chamber (8) as said coolant,
- wherein in said vaporization chamber (7) said coolant liquid (B) flows in contact with a heat exchanging wall (6) in heat exchanging contact with flue gas (A) in said flue gas chamber (8) thereby causing vaporization of said coolant liquid (B)
- wherein said vaporization chamber (7) comprises a plurality of flow-modifying structures (9) that are arranged in series in the direction of the flow of coolant liquid (B) and that are each configured for modifying the flow of the coolant liquid (B) and the vapour (C) in said vaporization chamber (7),
wherein each of said flow-modifying structures (9a, 9b, 9c) comprises:
- a first part (10) wherein a channel (18a) for coolant is divided in two channels (18b, 18c) for coolant,
- and a second part (11), arranged downstream of the first part (10), wherein at least two channels (18b, 18c) for coolant are combined into a single channel (18d) for coolant.

2. A method according to claim 1,
wherein said heat exchanger (2) comprises
- an inlet (12) for pressurized coolant liquid and an inlet plenum (13) between said inlet (12) and a first end (16) of said vaporization chamber (7),
- an outlet (14) for vapour (C) at an opposite second end (17) of said vaporization chamber (7), wherein said first and second end (16, 17) define a length (1) of said vaporization chamber between them,
- and preferably an outlet plenum (15) between said second end (17) and said outlet (14).

3. A method according to claim 2, wherein the method comprises flowing coolant liquid (B) from said first end (16) to said second end (17), and wherein at least part of said flowing coolant (B, C) is subjected to multiple flow modifications while flowing in said vaporization chamber (7) between said first end (16) and said second end (17), wherein each flow modification comprises a step of dividing the flow of coolant into two streams, and a step of combining at least two streams of coolant into a single stream.

4. A method according to any of the preceding claims, wherein said flow-modifying structures (9) are protrusions of said wall (6) into said vaporization chamber (7).

5. A method according to claim 2 or 3, and further according to claim 4,
- wherein said vaporization chamber (7) comprises as said protrusions staggered rows (22a, 22b) of pillars (9),
- wherein said rows are distributed over said length (1) of the vaporization chamber (7),
- wherein in each row (2) the pillars (9) are distributed in width direction (w) transversal to said length (1).
- and wherein for a pair of neighbouring rows (22a, 22b), the pillars (9) have a different position in said width direction (w), such that the rows of pillars are staggered.

6. A method according to claim 5, wherein said vaporization chamber (7) is provided between two stacked walls, at least one of the walls being the heat exchanging wall (6), wherein said pillars connect said walls.

7. A method according to any of the preceding claims, wherein the channels (18) between two flow-modifying structures (9) have a diameter of less 5.0 mm.

8. A method according to any of the preceding claims, wherein, the coolant is ethanol, wherein the method comprises evaporating in the heat exchanger at least 1.0 g coolant per second.

9. A method according to any of the preceding claims, wherein the pressure in the vaporization chamber (7) is 1 - 20 bar, for example 1-10 bar.

10. A heat recovery system (100) comprising:
- a heat exchanger (2) with a first chamber (8) and a vaporization chamber (7) and a heat exchanging wall (6) between said chambers, and an inlet 12 for pressurized coolant liquid and an outlet (14) for coolant vapor, wherein said inlet 12 and outlet 14 are connected to said vaporization chamber (7), and wherein the first chamber has an inlet and an outlet for a first fluid stream,
- an expansion device (3) connected to said outlet (14), preferably coupled to a generator (20)
- a condenser (4) for condensing vapour arranged downstream of said expansion device 3, with an outlet for condensate,
- a pump (5) for pressurizing the condensate, and a connection from said pump to said inlet (12),
wherein said vaporization chamber (7) comprises a plurality of flow-modifying structures (9) that are arranged in series in the direction of the flow of coolant liquid (B) and that are each configured for modifying the flow of the coolant liquid (B) and the coolant vapour (C) in said vaporization chamber (7),
wherein each of said flow-modifying structures (9a, 9b, 9c) comprises:
- a first part (10) wherein a channel (18a) for coolant is divided in two channels (18b, 18c) for coolant,
- and a second part (11), arranged downstream of the first part (10), wherein at least two channels (18b, 18c) for coolant are combined into a single channel (18d) for coolant.

11. A heat recovery system according to claim 10, wherein said flow-modifying structures (9) are protrusions of said wall (6) into said vaporization chamber (7).

12. A heat recovery system according to claim 11, wherein said first part (10) is a diverging protrusion in the coolant flow direction, and wherein said second part is a converging protrusion.

13. A heat recovery system according to any of claim 10-12, wherein comprising a stack of alternatingly first chambers (8) and vaporization chambers (7) separated by said wall (6).

14. A vehicle comprising a combustion engine and a heat recovery system (100) according to any of claims 10-13 wherein an outlet for exhaust gas of said combustion engine is connected with an inlet of said first chamber 8.

15. Use of a plurality of flow-modifying structures (9) that are arranged in series in the direction of the flow of coolant liquid (B) and that are each configured for modifying the flow of the coolant liquid (B) and the coolant vapour (C) in the system of claim 10 for reducing the operating pressure of the system while avoiding explosive bubble growth, wherein each of said flow-modifying structures (9a, 9b, 9c) is as described in claim 10.
